# EUROPEAN PATENT SPECIFICATION

(11) **EP 2 224 188 B1**
(45) Date of publication and mention of the grant of the patent: **20.09.2017**
(21) Application number: 10250343.0
(22) Date of filing: 26.02.2010
(51) Int. Cl.: F25B 29/00, F25B 13/00

(54) **Water circulation system associated with refrigerant cycle**
Wasserzirkulationssystem im Zusammenhang mit Kühlkreislauf
Système de circulation d'eau associé à un cycle de réfrigération

(30) Priority: 26.02.2009 KR 20090016266
(43) Date of publication of application: 01.09.2010
(73) Proprietor: LG Electronics Inc., Seoul (KR)
(72) Inventor: Han, Wang Kuk, Changwon City Gyoungsangnam-do, 641-711 (KR)
(74) Representative: Boult Wade Tennant

(56) References cited:
- EP-A2- 2 151 633
- US-A- 4 308 042
- US-A- 4 553 401
- US-A- 5 239 838
- US-A- 5 320 166

## Description

### BACKGROUND

The present disclosure relates to a water circulation system associated with a refrigerant cycle.

In a typical cooling/heating system, heating/cooling is performed by an air conditioner using a refrigerant cycle and warm/hot water supplying is performed by a boiler having a separate heating source.

That is, the air conditioner includes an outdoor unit installed at an outdoor side and an indoor unit installed at an indoor side. The outdoor unit includes a compressor compressing a refrigerant, an outdoor heat exchanger for heat-exchange between the refrigerant and outdoor air, and an expansion unit for expanding the refrigerant. The indoor unit includes an indoor heat exchanger for heat-exchange between the refrigerant and indoor air. At this point, one of the indoor and outdoor heat exchangers functions as a condenser and the other functions as an evaporator so that the compressor, outdoor heat exchanger, condensing unit, and indoor heat exchanger perform a refrigerant cycle.

Further, the boiler generates heat using oil, gas or electricity to heat water, thereby supplying the warm/hot water or performing the floor heating.

US 5,320,166 discloses a heat pump system in which a vapour compression refrigerant is isolated from the space being conditioned, heat pumped by the refrigerant circuit is stored and a heat transfer fluid circuit is controlled. US 4,553,401 discloses a reversible cycle heating and coding system. US 5,239,838 discloses an apparatus and method for exchanging heat energy between a refrigeration circuit and a hot water system utilizes a solar heated water tank or a conventional water heater.

### SUMMARY OF THE INVENTION

The present invention provides a water circulation system including a refrigerant cycle as set out in claim 1.

There is provided a water circulation system associated with a refrigerant cycle, which can stably maintain not only a water supplying performance but also a heating performance even in an extreme cold front area.

There is provided a water circulation system associated with a refrigerant cycle, which is configured to easily install a heating apparatus.

A water circulation system associated with a refrigerant cycle includes: an outdoor unit including a compressor for compressing the refrigerant, an outdoor heat exchanger for heat exchange between the refrigerant and outdoor air, and an expansion unit for expanding the refrigerant; a water-heat exchange indoor unit for heat exchange between the refrigerant and water, the water-heat exchange indoor unit being connected to the compressor and the expansion unit to define the refrigerant circuit; a hot water supply unit the water passing through the indoor heat exchanger; a heating unit for heating the indoor air using the water passing through the indoor heat exchanger; and a water-refrigerant heat exchanger that is provided on the water-heat exchange indoor unit and connected to a side of the refrigerant cycle to heat the refrigerant using the water flowing therein.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:
FIG. 1 is a view of a water circulation system associated with a refrigerant cycle according to an embodiment;
FIG. 2 is a view of an outdoor unit of the water circulation system of FIG. 1;
FIG. 3 is a view of a heat recovery unit of the water circulation system of FIG. 1;
FIG. 4 is a view illustrating a water-heat exchange indoor unit, hot water supply unit, and heating unit of the water circulation system associated with the refrigerant cycle of FIG. 1;
FIG. 5 is a view of a heating unit of the water circulation system associated with the refrigerant cycle of FIG. 1;
FIG. 6 is a view illustrating flows of refrigerant and water in a heating mode using both of an outdoor heat exchanger and a water heating unit of the water circulation system;
FIG. 7 is a view illustrating flows of refrigerant and water in a heating mode using only a water heating unit of the water circulation system associated with the refrigerant cycle;
FIG. 8 is a view illustrating flows of refrigerant and water in a defrosting mode of the water circulation system associated with the refrigerant cycle;
FIG. 9 is a view illustrating flows of refrigerant and water in a heating mode using only an outdoor heat exchanger of the water circulation system associated with the refrigerant cycle;
FIG. 10 is a view illustrating flows of refrigerant and water in the heating mode after the water circulation system associated with the refrigerant cycle has been left off for a long time;
FIG. 11 is a view illustrating flows of refrigerant and water in a cooling mode of the water circulation system associated with the refrigerant cycle;
FIG. 12 is a block diagram of a control structure of the water circulation system associated with the refrigerant cycle of FIG. 1;
FIG. 13 is a flowchart illustrating a method for controlling a heating source in accordance with current pressure detected by the high pressure sensor in the water circulation system associated with the refrigerant cycle of FIG. 1; and
FIG. 14 is a view of a water circulation system associated with a refrigerant cycle according to an example not forming part of this invention.

### DETAILED DESCRIPTION OF THE INVENTION

Reference will now be made in detail to the embodiments of the present disclosure, examples of which are illustrated in the accompanying drawings.

In the following detailed description of the preferred embodiments, reference is made to the accompanying drawings that form a part hereof, and in which is shown by way of illustration specific preferred embodiments in which the invention may be practiced. These embodiments are described in sufficient detail to enable those skilled in the art to practice the invention, and it is understood that other embodiments may be utilized and that logical structural, mechanical, electrical, and chemical changes may be made without departing from the scope of the invention. To avoid detail not necessary to enable those skilled in the art to practice the invention, the description may omit certain information known to those skilled in the art. The following detailed description is, therefore, not to be taken in a limiting sense, and the scope of the present invention is defined only by the appended claims.

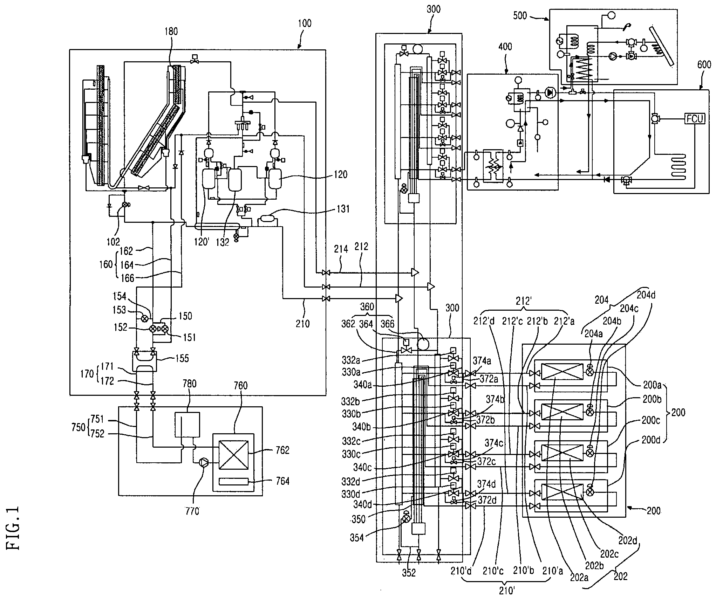

FIG. 1 is a view of a water circulation system associated with a refrigerant cycle according to an embodiment.

Referring to FIG. 1, a water circulation system of an embodiment includes at least one outdoor unit 100 having an outdoor heat exchanger 180, a plurality of air conditioning indoor units 200 for heat exchange between a refrigerant and indoor air for heating an indoor space, a water-heat exchange indoor unit 400 for heating water through heat exchange between the refrigerant and the water, a hot water supply unit 500 that is connected to the water-heat exchange indoor unit 400 to supply the warm/hot water, a heating unit 600 having a water piper extending from the water-heat exchange indoor unit 400, a water heating unit 700 for selectively heating the water for heating the refrigerant, and a heat recovery unit 300 that is installed between the outdoor unit 100, air conditioning indoor units 200, and water-heat exchange indoor unit 400 to control flow of the refrigerant.

At this point, the outdoor heat exchanger 180 and the indoor heat exchanger 202 together with compressors 120 and 120' compressing the refrigerant to a high temperature/high pressure and an expansion unit for expanding the refrigerant define a refrigerant cycle. The expansion unit may be at least one of an outdoor linear expansion valve 102, an expansion valve 204, and a heating expansion valve 152 in accordance with an operational mode such as a cooling mode and a heating mode. The refrigerant varies in a variety of phases while flowing along the refrigerant cycle.

The water circulation system associated with the refrigerant cycle may operate to selectively or simultaneously perform the hot water supply and the floor heating. In addition, the water circulation system may operate such that the air conditioning indoor units 200 simultaneously or partly perform the cooling/heating operation.

In addition, the water heating unit 700 is designed to enhance the heating efficiency by selectively heating the refrigerant in the heating mode in the extreme cold front area.

The outdoor unit 100 is generally installed at an outdoor side and includes the constant speed compressor 120, the inverter compressor 120' that is a variable speed heat pump, an accumulator 132, the outdoor heat exchanger 180, and the linear expansion valve.

Further, the air conditioning indoor unit 200 is installed in an indoor space of a building to control the indoor air by directly discharging the air to the indoor space.

Disposed between the outdoor unit 100 and the heat recovery unit 300 are a liquid pipe 210 that is a single pipe along which a liquid-phase refrigerant flows, a high pressure gas pipe 214 along which a high pressure gas-phase refrigerant flows, and a low pressure gas pipe 212 along which a low pressure gas-phase refrigerant flows.

The air conditioning indoor units 200 are provided with an indoor liquid pipe 210' along which the liquid-phase refrigerant flows and an air conditioning indoor gas pipe 212' along which the gas-phase refrigerant flows. The indoor liquid pipe 210' and the air conditioning indoor gas pipe 212' are installed communicating with the liquid pipe 210, high pressure gas pipe 214, and low pressure gas pipe 212.

The air conditioning indoor units 200 may have different properties and structures. Accordingly, diameters of the indoor liquid pipe 210' and the air conditioning indoor gas pipe 212' may vary depending on a capacity of the air conditioning indoor unit 200 connected thereto.

That is, the air conditioning indoor units 200 include a first air conditioning unit 200a, a second air conditioning unit 200b, a third air conditioning unit 200c, and a fourth air conditioning unit 200d. First, second, third, and fourth air conditioning indoor gas pipes 212'a, 212'b, 212'c, and 212'd are respectively connected to the first air conditioning unit 200a, second air conditioning unit 200b, third air conditioning unit 200c, and fourth air conditioning unit 200d to guide the flow of the refrigerant. First, second, third, and fourth air conditioning indoor liquid pipes 210'a, 210'b, 210'c, and 210'd are further respectively connected to the first air conditioning unit 200a, second air conditioning unit 200b, third air conditioning unit 200c, and fourth air conditioning unit 200d to guide the flow of the refrigerant.

The air conditioning indoor unit 200, indoor liquid pipes 210', and air conditioning indoor gas pipes 212' may have different sizes and capacities.

Meanwhile, the expansion valves 204 provided on the air conditioning indoor units 200 controls the refrigerant directed to the respective indoor heat exchangers 202. That is, the first air conditioning indoor unit 200a includes a first indoor heat exchanger 202a and a first expansion valve 204a and the second air conditioning indoor unit 200b includes a second indoor heat exchanger 202b and a second expansion valve 204b. In addition, the third air condition indoor unit 200c includes a third indoor heat exchanger 202c and a third expansion valve 204c and the fourth air conditioning indoor unit 200d includes a fourth indoor heat exchanger 202d and a fourth expansion valve 204d. Therefore, the expansion valves 204 may be differently controlled depending on user's selection and adjust flow rate of the refrigerant directed into the indoor heat exchangers 202.

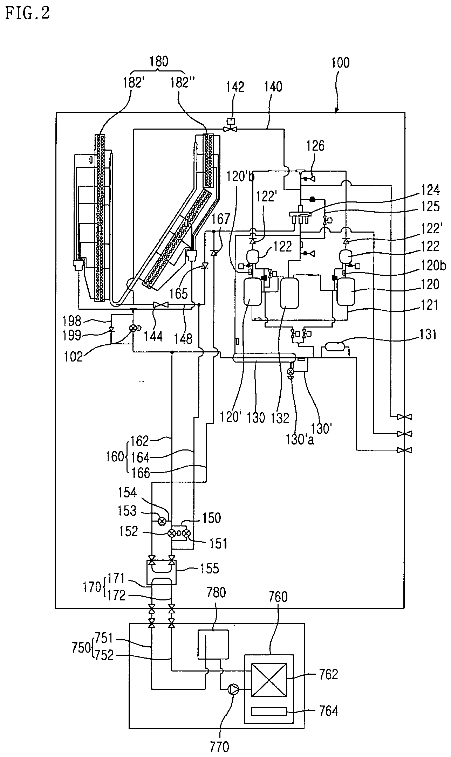

The outdoor unit will be described in more detail hereinafter with reference to FIG. 2.

FIG. 2 is a view of the outdoor unit of the water circulation system of FIG. 1.

A fluid equalizing pipe 121 is installed between the constant speed compressor 120 and the inverter compressor 120' to connect the constant speed compressor 120 to the inverter compressor 120'. Accordingly, when there is a shortage of fluid supply in one of the compressors 120 and 120', the other of the compressors 120 and 120' compensates for the shortage of the fluid to prevent the damage of the compressors 120 and 120', which may be caused by the shortage of the fluid supply.

Scroll compressors that have low noise and excellent efficiency are used as the compressors 120 and 120'. Especially, the inverter compressor 120' may be an inverter scroll compressor whose RPM is adjusted depending on a load capacity. Therefore, when the number of the air conditioning indoor units 200 operating is small and thus the load capacity is small, the inverter compressor 120' first operates. In this state, when the load capacity is gradually increased and thus the inverter compressor 120' cannot afford the increased load capacity, the constant speed compressor 120 additionally operates.

Compressor discharge temperature sensors 120b and 120'b for measuring a temperature of the refrigerant discharged from the compressors 120 and 120' and an oil separator 122 are provided at outlet sides of the constant speed compressor 120 and the inverter compressor 120'. The oil separator 122 separates oil from the refrigerant discharged from the compressors 120 and 120' and recovers the separated oil to the compressors 120 and 120;.

That is, in order to dissipate frictional heat generated when the compressors 120 and 120' operate, the oil together with the refrigerant is discharged through outlets of the compressors 120 and 120'. The oil contained in the refrigerant is separated from the refrigerant by the oil separator 122 and returned to the compressors 120 and 120'.

A backflow prevention valve 122' is further installed on the outlet side of the oil separator 122 to prevent the refrigerant from flowing back. That is, when only one of the constant speed compressor 120 and the inverter compressor 120' operates, the backflow prevention valve 122' prevents the compressed refrigerant from flowing back toward the other of the compressors 120 and 120'.

The oil separator 122 is designed to communicate with a four-way valve 124 through a pipe. The four-way valve 124 is installed to switch a flow direction of the refrigerant depending on the operation mode. Four ports of the four-way valve 124 are respectively connected to an outlet (or the oil separator) of the compressors 120 and 120' and an inlet (or the accumulator) of the compressors 120 and 120', the outdoor heat exchanger 180, and the air conditioning indoor unit 200.

Therefore, the refrigerants discharged from the compressors 120 and 120' are collected together and directed into the four-way valve 124.

Meanwhile, a hot gas pipe 125 for directly directing a part of the refrigerant, which is being introduced into the four-way valve, to the accumulator 132 is disposed across the four-way valve 124.

When there is a need to increase pressure of the low pressure refrigerant introduced into the accumulator 132, the hot gas pipe 125 allows the high pressure refrigerant of the outlet side to be directly supplied to the inlet side of the compressors 120 and 120'.

A high pressure sensor 126 is provided above the hot gas pipe 125. The high pressure sensor 126 is for measuring pressure of the refrigerant compressed in the compressors 120 and 120'. That is, the high pressure sensor 126 allows the heat pump refrigerant cycle to compare the pressure of the refrigerant with a preset target pressure for improving the heat-exchange efficiency.

Accordingly, the high pressure sensor 126 cooperates with a bypass valve 142 that will be described hereinbelow. That is, when the pressure of the refrigerant measured by the high pressure sensor 126 is less than the target pressure, the bypass valve 142 is opened to increase the pressure of the refrigerant.

An outdoor over-cooler 130 is provided at the outlet side of the outdoor heat exchanger 180. The outdoor over-cooler 130 further cools the refrigerant heat-exchanging by the outdoor heat exchanger 180. The outdoor over-cooler 130 is located at a certain location of the liquid pipe 210.

The outdoor over-cooler 130 is formed with a dual-pipe. That is, the outdoor over-cooler 130 includes an inner pipe (not shown) communicating with the liquid pipe 210 and an outer pipe (not shown) communicating with a reverse transfer pipe 120' and disposed around the inner pipe.

Meanwhile, the reverse transfer pipe 130' communicates with the liquid pipe 210 formed at the outlet of the outdoor over-cooler 130. The reverse transfer pipe 130' functions to allow the refrigerant discharged from the outdoor heat exchanger 180 and flowing through the liquid pipe 210 to reversely flow to the outer pipe (not shown).

An over-cooling expansion valve 130'a for converting the liquid-phase refrigerant into a low temperature gas-phase refrigerant by expanding the liquid-phase refrigerant is installed on the reverse transfer pipe 130'. The over-cooling expansion valve 130'a adjusts an amount of the refrigerant reversely flowing through the reverse transfer pipe 130'.

Accordingly, the refrigerant passing through the outdoor over-cooler 130 is adjusted to a desired temperature. That is, as the amount of the refrigerant reversely flowing through the reverse transfer pipe 130' increases, the temperature of the refrigerant passing through the outdoor over-cooler 130 is reduced.

By the above-described structure, when a part of the refrigerant discharged from the outdoor over-cooler 130 is introduced into the reverse transfer pipe 130', the refrigerant is converted into the low temperature gas-phase refrigerant by expanding through the over-cooling expansion valve 130'a. The low temperature gas-phase refrigerant flows reversely through the outer pipe (not shown) of the outdoor over-cooler 130 and heat-exchanges with the liquid-phase refrigerant flowing along the inner pipe (not shown), thereby further cooling the liquid-phase refrigerant.

As described above, the liquid-phase refrigerant discharged from the outdoor heat exchanger 180 is further cooled by heat conduction through the outdoor over-cooler 130 and supplied to the air conditioning indoor unit 200. The reverse refrigerant discharged from the outer pipe of the outdoor over-cooler 130 is supplied to the compressors 120 and 120' through the accumulator 132.

A drier 131 is installed at a side of the outdoor over-cooler 130, i.e., at a side of the liquid pipe 210 along which the refrigerant discharged from the outdoor heat exchanger 180 is guided. The drier 131 functions to remove moisture from the refrigerant flowing along the liquid pipe 210.

The accumulator 132 is disposed between the constant speed compressor 120 and the inverter compressor 120'. The accumulator 132 filters off the liquid-phase refrigerant to allow only the gas-phase refrigerant to be introduced into the compressors 120 and 120'.

That is, among the refrigerant introduced from the air conditioning indoor unit 200, if the liquid-phase refrigerant that is not evaporated is directly introduced into the compressors 120 and 120', the load of the compressors 120 and 120' increases, thereby damaging the compressors 120 and 120'.

Accordingly, since a weight of the liquid-phase refrigerant among the refrigerant introduced into the accumulator 132 is relatively greater than the gas-phase refrigerant, the liquid-phase refrigerant is stored at a lower portion of the accumulator 132 and only the gas-phase refrigerant at an upper portion of the accumulator 132 is introduced into the compressors 120 and 120'.

The outdoor heat exchanger 180 is provided in the outdoor unit 100. The outdoor heat exchanger 180 allows the refrigerant flowing therein to heat-exchange with the external air. The outdoor heat exchanger 180 includes a vertical portion 182' that is elected at a right angle with respect to a ground for the heat exchange between the refrigerant flowing along the outdoor heat exchanger 180 and the external air and an inclined portion 182" inclined rightward from the vertical portion 182' at a predetermined angle.

A cooling-only pipe 198 is provided at a lower portion of the outdoor heat exchanger 180. The cooling-only pipe 198 is designed to guide the flow of the refrigerant in the cooling mode of the heat pump refrigerant cycle. A first check valve 199 for preventing the refrigerant flowing backward is provided at a side of the cooling-only pipe 198.

The bypass pipe 140 is provided between the outdoor heat exchanger 180 and the four-way valve 124. The bypass pipe 140 is configured to selectively supply the high temperature/high pressure refrigerant into the outdoor heat exchanger 180. A bypass valve 142 for selectively checking the bypass pipe 140 at a side of the bypass pipe 142.

In more detail, when the water circulation system associated with the refrigerant cycle operates in a defrosting mode or operates in the heating mode after leaving without operation for long time, the pressure of the refrigerant compressed by the compressors 120 and 120' and measured by the high pressure sensor 126 is less than the target pressure and thus the refrigerant compressed by the compressors 120 and 120' bypasses toward the lower portion of the outdoor heat exchanger 180 through the bypass pipe 140.

At this point, the target pressure may vary depending on an indoor heating load, indoor cooling load, and hot water supply load of the air conditioning indoor unit 200, hot water supply unit 500, and heating unit 600.

In addition, a bypass guide valve 144 is provided under the outdoor heat exchanger 180 to block the refrigerant flow direction so that the refrigerant is directed into the outdoor heat exchanger 180 through the bypass pipe 140.

The bypass guide valve 144 communicates with the bypass pipe 1400 and is installed at a side of the outdoor discharge pipe 148 guiding the refrigerant discharged from the outdoor heat exchanger 180 to the four-way valve.

Accordingly, when the bypass guide valve 144 is closed and the bypass valve 142 is opened to direct a part of the refrigerant discharged from the compressors 120 and 120' into the outdoor discharge pipe 148 through the bypass pipe 140, the refrigerant cannot be directed to the four-way valve 124 but introduced into the outdoor heat exchanger 180.

A water-refrigerant heat exchanger 155 for heating the refrigerant and a refrigerant heating pipe 160 for guiding the refrigerant to the water-refrigerant heat exchanger 155 are provided in the outdoor unit 100. The refrigerant heat-exchanges with the water while passing through the water-refrigerant heat exchanger 155. A plate type heat exchanger for the heat exchange between the refrigerant circulating through the refrigerant heating pipe 160 and the water may be used as the water-refrigerant heat exchanger 155.

That is, a water circulation pipe 170 is connected to the water-refrigerant heat exchanger 155. The water heated by the water heating unit 700 circulates the water circulation pipe 170. The refrigerant and water passing through the water-refrigerant heat exchanger 155 separately flows and heat-exchange with each other, thereby heating the refrigerant.

In addition, the refrigerant heating pipe 160 is connected between the outdoor linear expansion valve 102 and the outdoor over-cooler 130 and communicates with the outdoor discharge pipe 148.

That is, the refrigerant heating pipe 160 includes a first refrigerant pipe 162 for guiding the refrigerant between the outdoor linear expansion valve 102 and the outdoor over-cooler 130 to the water-refrigerant heat exchanger 155, a second refrigerant pipe 164 for guiding the refrigerant from the outdoor discharge pipe 148 to the water-refrigerant heat exchanger 155, and a third refrigerant pipe 166 for guiding the refrigerant from the water-refrigerant heat exchanger 155 to the outdoor discharge pipe 148.

The second refrigerant pipe 164 merges with the first refrigerant pipe 162 in the outdoor unit 100. The first refrigerant pipe 162 communicates with the third refrigerant pipe 166. Therefore, the refrigerant directed to the first refrigerant pipe 162 or the second refrigerant pipe 164 is returned to a pipe of the refrigerant cycle through the third refrigerant pipe 166.

An overheating prevention pipe 154 is provided at a side of the first refrigerant pipe 162. The overheating prevention pipe 154 is designed to communicate with the first and third refrigerant pipes 162 and 166. An overheating prevention valve 153 is provided at a side of the overheating prevention pipe 154.

The overheating prevention valve 153 selectively opens the overheating prevention pipe 154 to direct a part of the refrigerant introduced through the first refrigerant pipe to the third refrigerant pipe 166, thereby preventing the overheating of the refrigerant in advance.

A recovery pipe 150 is provided at a side of the first refrigerant pipe 162. An opening/closing valve 151 is provided on the recovery pipe 150 to selectively allow for the flow of the refrigerant.

That is, the heating expansion valve 152 is provided under the recovery pipe 150 to expand the refrigerant when the water-refrigerant heat exchanger 155 is used as the evaporator.

Accordingly, when the refrigerant is introduced through the first refrigerant pipe 612 in a state where the opening/closing valve 151 cuts off the recovery pipe 150, the refrigerant expands through the heating expansion valve 152.

In addition, second and third check valves 165 and 167 are provided at sides of the outdoor discharge pipe 148 and the third refrigerant pipe 166 to control a flow direction of the refrigerant. That is, the second and third check valves 165 and 167 functions to allow the refrigerant to flow only in one direction.

Meanwhile, the water circulation pipe 170 for heating the water for heating the refrigerant is provided between the water-refrigerant heat exchanger 155 and the water heating unit 700. The water circulation pipe 170 includes a first circulation pipe 171 connecting the water-refrigerant heat exchanger 155 to a first water heating passage 751 and a second circulation pipe 172 connecting the water-refrigerant heat exchanger 155 to a second water heating passage 752.

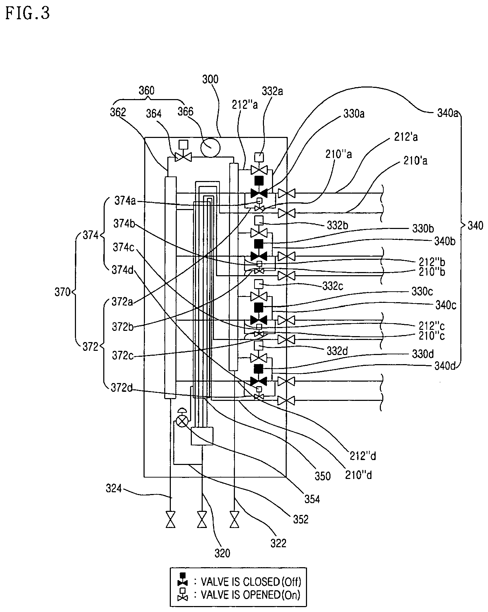

The following will describe the heat recovery unit with reference to FIG. 3.

FIG. 3 is a view of the heat recovery unit of the water circulation system of FIG. 1.

Referring to FIG. 3, the heat recovery unit 300 includes first and second heat recovery units that are respectively disposed between the outdoor unit 100 and the air conditioning indoor unit 200 and between the outdoor unit 100 and the water-heat exchange indoor unit 400. The first and second heat recovery units are connected to each other.

Accordingly, the heat recovery unit 300 allows the refrigerant to be directed to the water-heat exchange indoor unit 400 and the air conditioning indoor unit 200 by controlling the flow direction of the refrigerant, thereby enabling the air conditioning indoor unit 200 to selectively operate in the heating and cooling modes. That is, the refrigerant is divided by the heat recovery unit 300 and directed to at least one of the water-heat exchange indoor unit 400 and the air conditioning indoor unit 200.

A liquid connection pipe 320, high pressure connection pipe 322, and low pressure connection pipe 324 are respectively connected to the liquid pipe 210, high pressure gas pipe 213, and low pressure gas pipe 212 at a side of the heat recovery unit 300.

That is, the liquid connection pipe 320 is connected to the liquid pipe 210 and the high pressure connection pipe 322 is connected to the high pressure gas pipe 214. In addition, the low pressure connection pipe 324 is connected to the low pressure gas pipe 212.

An indoor connection gas pipe 212" and indoor connection liquid pipe 210" that are respectively connected to the air conditioning indoor gas pipe 212' and the indoor liquid pipe 210' are provided on the heat recovery unit 300 to guide the flow of the refrigerant.

A plurality of main valves 330 and a plurality of sub-valves 332 that are bypass valves are installed on the indoor connection gas pipe 212" . That is, as shown in FIG. 3, a first main valve 330a is installed on a first indoor connection gas pipe 212" a connected to the first air conditioning indoor gas pipe 212' a of the first air conditioning indoor unit 200a and a second main valve 330b is installed on a second indoor connection gas pipe 212" b connected to a second air conditioning indoor gas pipe 212'b of the second air conditioning indoor unit 200b.

In addition, a third main valve 330c is installed on a third indoor connection gas pipe 212" c connected to the third air conditioning indoor gas pipe 212'c of the third air conditioning unit 200c and a fourth main valve. 330d is installed on a fourth indoor connection gas pipe 212" d connected to the fourth air conditioning indoor gas pipe 212'd of the fourth air conditioning indoor unit 200d.

Accordingly, when the water circulation system associated with the refrigerant cycle operates in the cooling or heating mode, the main valves 330a, 330b, 330c, and 330d and the sub-valves 332a, 332b, 332c, and 332d are selectively opened. In the cooling/heating mode conversion, all of the main valves 330a, 330b, 330c, and 330d and all of the sub-valves 332a, 332b, 332c, and 332d are closed for a predetermined time, for example, for about 2-3 minutes.

This is to reduce colliding impact between the high pressure refrigerant and the low pressure refrigerant when the flow direction of the refrigerant changes in the cooling/heating mode conversion.

Meanwhile, branch pipes 340 are branched off from the indoor connection gas pipes 212" in the heat recovery unit 300. That is, a first branch pipe 240a is branched off from the first indoor connection gas pipe 212" a and the first sub-valve 332a is installed on the first branch pipe 240a to control the refrigerant passing through the first branch pipe 340a.

Second, third, and fourth branch pipes 340b, 340c, and 340d are respectively branched off from the second, third, and fourth indoor connection gas pipes 212" b, 212" c, and 212" d and second, third, and fourth sub-valves 332, 332c, and 332d are respectively provided on the second, third, and fourth branch pipes 340b, 340c, and 340d.

The branch pipes 340 are connected to the high pressure connection pipe 322. That is, each of the branch pipes 340 has a first end connected to the indoor connection gas pipe 212" and a second end connected to the high pressure gas pipe 214. Accordingly, when the sub-valves 332 are opened, the air conditioning indoor gas pipe 212' is connected to the high pressure gas pipe 214.

The heat recovery unit 300 further includes a simultaneous over-cooler 350. The simultaneous over-cooler 350 operates in the case where the heating and cooling are simultaneously performed, thereby further improving the cooling efficiency. The simultaneous over-cooler 350 is connected to the liquid pipe 210 and formed of a dual-pipe so that the refrigerant flowing along the liquid pipe 210 is further cooled.

Although not shown in the drawings, the liquid pipe 210 in the simultaneous over-cooler 350 may be spirally formed to improve the cooling speed and efficiency.

A detour pipe 352 branched off from the liquid pipe 210 is further formed at a lower portion of the simultaneous over-cooler 350. An over-cooling adjusting valve 354 is provided on the detour pipe 352. The over-cooling adjusting valve 354 is opened in the cooling/heating simultaneous operation, thereby further cooling the refrigerant flowing along the liquid pipe 210. That is, the gas/liquid-phase refrigerant flowing along the liquid pipe 210 is cooled by the simultaneous over-cooler 350 and thus fully phase-changed into the liquid-phase refrigerant.

A condensed liquid removing unit 360 is further provided in the heat recovery unit 300. The condensed liquid removing unit 360 includes a refrigerant connection pipe 362 connecting the high pressure gas pipe 214 to the low pressure gas pipe 212, a connection pipe opening/closing valve 364 controlling flow of the refrigerant flowing along the refrigerant connection pipe 362, and a capillary tube 366 expanding the refrigerant flowing along the refrigerant connection pipe 362.

The connection pipe opening/closing valve 364 opens the refrigerant connection pipe 362 in an all-room cooling mode (i.e., in the case where all of the air conditioning indoor units operate in the cooling mode). The refrigerant flowing along the refrigerant connection pipe 362 expands by the capillary tube 366. Accordingly, in the all-room cooling mode, the liquid-phase refrigerant condensed in the high pressure gas pipe 214 expands and is recovered to the low pressure gas pipe 212.

Meanwhile, a refrigerant detouring unit 370 is further provided in the heat recovery unit 300. The refrigerant detouring unit 370 functions to reduce the colliding impact by detouring the refrigerant when the refrigerant staying before the cooling/heating conversion of the air conditioning indoor units 200 collides with the refrigerant flowing after the cooling/heating conversion.

That is, when the high pressure refrigerant collides with the low pressure refrigerant, the refrigerant detouring unit 370 detours the refrigerant to compensate for the pressure difference, thereby reducing noise that is generated in the cooling/heating conversion.

To this end, the refrigerant detouring unit 370 includes a refrigerant detouring pipe 372 having a first end communicating with the low pressure connection pipe 324 and a second end communicating with the indoor connection gas pipe 212" and a refrigerant detouring valve 374 for selectively opening and closing the refrigerant detouring pipe 372.

In more detail, the first to fourth indoor connection gas pipes 212" a to 212" d include refrigerant detouring pipes 372a, 372b, 372c, and 372d and refrigerant detouring valves 374a, 374b, 374c, and 374d, respectively.

In the all-room cooling mode, when one of the rooms operates in the heating mode, the refrigerant detouring valves 374a, 374b, 374c, and 374d are identically opened and closed to the sub-valves 332a, 332b, 332c, and 332d.

Accordingly, the refrigerant staying in the branch pipes 340a, 340b, 340c, and 340d in the state where the sub-valves 332a, 332b, 332c, and 332d and the refrigerant detouring valves 374a, 374b, 374c, and 374d are closed in the cooling mode collides with the refrigerant that is introduced from the outdoor unit 100 into the branch pipes 340a, 340b, 340c, and 340d as the sub-valves 332a, 332b, 332c, and 332d and the refrigerant detouring valves 374a, 374b, 374c, and 374d are opened when the mode is converted into the heating mode. At this point, since a part of the refrigerant is detoured to the refrigerant detouring pipes 372a, 372b, 372c, and 372d, thereby reducing the colliding impact.

The above-described structure of the heat recovery unit 300 is applied to both of a pair of the heat recovery units shown in FIG. 1. However, since the heat recovery unit 300 located at an upper side is connected to the water-heat exchange indoor unit 400, only one of the air conditioning indoor gas pipes 212' and only one of the indoor liquid pipes 210' may be connected to the heat recovery unit 300 located at the upper side.

Needless to say, the air conditioning indoor unit 200 and the water-heat exchange unit 400 may be further connected to the rest of the air conditioning indoor units 212' and the indoor liquid pipes 210'.

The water-heat exchange indoor unit 400, the hot water supply unit 500, and the heating unit 600 are further provided at the right side of the heat recovery unit 300.

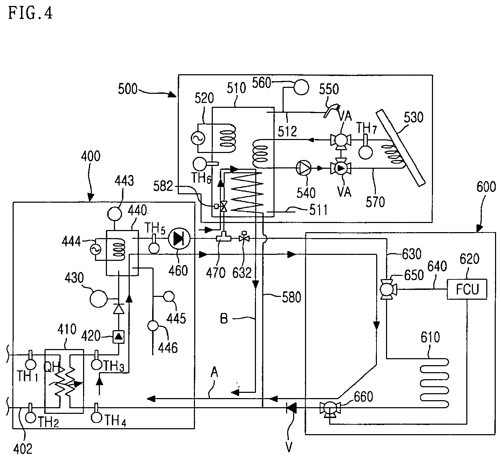

The following will describe the water-heat exchange indoor unit 400, hot water supply unit 500, and heating unit 600 in more detail with reference to FIG. 4.

FIG. 4 is a view illustrating the water-heat exchange indoor unit, hot water supply unit, and heating unit of the water circulation system associated with the refrigerant cycle.

The water-heat exchange indoor unit 400 is connected to a refrigerant pipe 402 for allowing the refrigerant discharged from the heat recovery unit 300 to be returned via the water-heat exchange indoor unit 400. The refrigerant pipe 402 passes through the water-refrigerant heat exchanger 410 for the heat exchange between the water and the refrigerant.

That is, the refrigerant pipe 402 connects the air conditioning indoor gas pipe 212' to the indoor liquid pipe 210', thereby forming a closed-circuit.

Further, temperature sensors TH1 and TH2 are provided on the refrigerant pipe 402. That is, the temperature sensors TH1 and TH2 are respectively provided on inlet and outlet sides of the water-refrigerant heat exchanger 410.

The water-refrigerant heat exchanger 410 is for the heat exchange between the refrigerant flowing along the heat pump refrigerant cycle and the water flowing along a water pipe. A plate type heat exchanger may be used as the water-refrigerant heat exchanger 410.

The water-refrigerant heat exchanger 410 receives heat from the refrigerant introduced from the heat recovery unit 300 and heats the water.

In more detail, the water passing through the hot water supply unit 500 and the heating unit 600 is not warm enough. This water is further heated by receiving the heat from the refrigerant while flowing through the water-refrigerant heat exchanger 410.

Accordingly, temperature sensors TH3 and TH4 may be respectively mounted on a water pipe near an inlet and a water pipe near an outlet of the water-refrigerant heat exchanger 410.

A flow switch 420 detecting the flow of the water is provided above the temperature sensors TH3 and TH4. An expansion tank 430 is provided above the flow switch 420.

In addition, the expansion tank 430 functions to absorb excessive expansion of the water that is heated while passing through the water-refrigerant heat exchanger 410. A diaphragm is received in the expansion tank 430 to move in response to the volume variation of the water in the water pipes. In addition, the expansion tank 430 is filled with nitrogen gas.

A heater assembly 440 is provided above the expansion tank 430. In addition, the heater assembly 440 is designed to allow the water passing through the water-refrigerant heat exchanger 410 to be heated by a sub-heater 444. The sub-heater 444 selectively operates depending on an amount of intake heat through the water-refrigerant heat exchanger 410.

An air vent 443 is formed on an upper portion of the heater assembly 440 to allow over-heated air existing in the heater assembly 440 to be discharged. A pressure gauge 445 and a relief valve 446 are provided on a side of the heater assembly 440 to properly adjust internal pressure of the heater assembly 440.

For example, when water pressure displayed on the pressure gauge 445 is excessively high, the relief valve 446 is opened to properly adjust the internal pressure of the water-heater exchange indoor unit 400.

A temperature sensor TH5 for measuring the water passing through the sub-heater is provided at a right side of the sub-heater 444.

A water pump 460 is provided at a right side of the temperature sensor TH5. The water pump 46 pumps out the water discharged through the water pipe extending from the outlet of the heater assembly 440 and supplies the water to the hot water supply unit 500 and the heating unit 600.

Meanwhile, the hot water supply unit 500 heats and supplies the water used for washing user's face, dishwashing, and the like.

A branch pipe 470 is provided at a location spaced apart from the water pump 460 in a water flow direction to selectively direct the water pumped out by the water pump 460 toward the hot water supply unit 500 and the heating unit 600.

Accordingly, a hot water supply pipe 580 is connected to an upper portion of the branch pipe 470 to guide the water to the hot water supply unit 500 and a heating pipe 630 is connected to a right side of the branch pipe 470.

In addition, a heat valve 632 and a hot water supply valve 582 are respectively provided on the heating pipe 630 and the hot water supply pipe 580.

Accordingly, the heating unit 600 and the hot water supply unit 500 selectively operate depending operation states of the hot water supply valve 582 and heating valve 630.

The hot water supply unit 500 includes a hot water supply tank 510 storing therein the water supplied from an external side and a sub-heater 520 provided in the hot water supply tank 510.

A sub-heating source for supplying heat to the hot water supply tank 510 may be added depending on an installation state. A heat accumulation unit 530 using solar energy may be used as the sub-heating source. A water inlet portion 511 through which cold water is introduced and a water outlet portion 512 through which heated water is discharged are provided on a side of the hot water supply unit 500.

In more detail, a part of the hot water supply pipe extending from the branch pipe 470 further extends to the hot water supply tank 510 and heats the water stored in the hot water supply tank 510. That is, the heat is transferred from the high temperature water flowing along the hot water supply pipe 580 to the water stored in the hot water supply tank 510.

If necessary, the sub-heating source and the sub-heater may operate together to supply additional heat. For example, when there is a need to quickly heat the water, both of the sub-heating source and the sub-heater may operate. In addition, a temperature sensor TH6 may be mounted on a side of the hot water supply tank 510.

A hot water discharging unit such as a shower unit 550 or a humidifier 560 may be connected to the water outlet portion 512. When the heat accumulation unit 530 using the solar energy is used as the sub-heating source, a heat accumulation pipe 570 extending from the heat accumulation unit 530 may be inserted into the hot water supply tank 510. A sub-pump 540 for controlling a flow rate in the heat accumulation pipe circuit is mounted on the heat accumulation pipe 570. A directional valve VA may be mounted on the heat accumulation pipe 570 to control a flow direction of the water in the heat accumulation pipe 570. A temperature sensor TH7 may be mounted on a side of the heat accumulation pipe 57.

The sub-heating source is not limited to the heat accumulation unit using the solar energy in the present invention.

Meanwhile, the heating unit 600 includes a flow heating unit 610 defined by a part of the heating pipe 630 buried in an indoor floor and an air heating unit 620 branched off from a point of the heat pipe 630 and arranged in parallel with the floor heating unit 610.

In more detail, as shown in FIG. 4, the floor heating unit 610 may be buried in the indoor floor in the form of a meander line. The air heating unit 620 may be a fan coil unit or a radiator. A part of the air heating pipe 640 branched of from the heating pipe 630 is provided on the air heating unit 620 as a heat exchanging unit. Fluid direction valves 650 and 660 such as three-way valves are installed at a portion at which the air heating pipe 640 is branched off so that the refrigerant flowing along the heating pipe 630 can be selectively directed to both or one of the floor heating unit 610 and the air heating unit 620.

An end portion of the hot water supply pipe 580 extending from the branch pipe 470 merges with a location spaced apart from an outlet end of the air heating pipe 640 in the water flow direction. Therefore, in a hot water supply mode, the refrigerant flowing along the hot water supply pipe 580 is directed to the heating pipe 630 and then to the water-refrigerant heat exchanger 410.

Here, like the location where the hot water supply pipe 580 merges with the heating pipe 630, a check valve V is installed at a location that requires the backflow prevention to prevent the water from flowing backward. Likewise, check valves may be respectively installed at an outlet end of the air heating pipe 640 and an outlet end of the floor heating unit 610 in addition to the installation of the fluid directional valve 660.

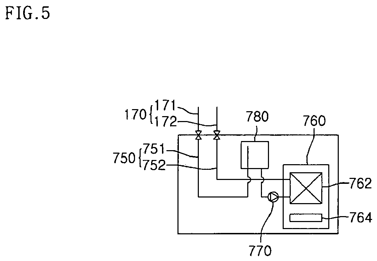

The following will describe the water heating unit in more detail with reference to FIG. 5.

FIG. 5 is a view of the water heating unit 700 of the water circulation system associated with the refrigerant cycle of FIG. 1.

As shown in FIG. 5, the water heating unit 700 is connected to the outdoor unit to selectively heat the water for heating the refrigerant. A water heating passage 750 is provided in the water heating unit 700.

The water heating passage 750 communicates with the water-refrigerant heat exchanger 155 so that the water of the outdoor unit 100 circulates the inside of the water heating unit 700.

That is, the water heating passage 750 is connected to the water circulation pipe 170. In more detail, the water heating passage 750 includes a first water heating passage 751 connected to a first circulation pipe 171 and a second water heating passage 752 connected to a second circulation pipe 172.

A water pump 770 for forcedly circulating the water in the water heating passage 760 is provided at a side of the water heating passage 750. Opposite ends of the water heating passage 750 communicate with the inside of the heating tank 780. A predetermined level of the water is stored in the heating tank 780 and the water in the heating tank 780 circulates along the water heating passage 750. Therefore, the heat of the water that is heated while flowing along the water heating passage 750 is stored in the heating tank 780.

At this point, in order to heat the water flowing along the water heating passage 750, a water heating unit is provided at a right side of the heating tank 780. The water heating unit 760 includes a water heating member 762 extending into the water heating passage 752 and a heating source 764 providing heat to the water heating member.

A variety of heating sources using gas, oil, electric heat, solar energy, ground source heat, and the like may be used as the heating source 764.

Meanwhile, the water heating unit 700 may be detachably coupled to the outdoor unit 100. Alternatively, the heating unit 700 may be detachably coupled to the air conditioning indoor unit 200, the water-heat exchange indoor unit 400, or the heat recovery unit 300. Therefore, since the water heating unit 700 can be detached as necessary, the use convenience can be improved.

In addition, the replacement of the heating source 764 can be easily done. Since the water-refrigerant heat exchanger 155 for the heat exchange between the water and the refrigerant is provided in the outdoor unit 100, the replacement of the heating source 764 can be realized by simply replacing the water heating unit 700 without replacing the water-refrigerant heat exchanger 155.

For example, when the heating source 764 uses oil or gas, there may be the case the user wants to replace the heating source with an electric heater using electricity. In this case, the water heating unit 700 having the heating source 764 using the oil or gas is separated from the outdoor unit 100. At this point, the water-refrigerant heat exchanger 155 is separated from the water heating unit 700. Next, the water heating unit 700 having the electric heater is coupled to the outdoor unit 10. That is, the water-refrigerant heat exchanger 155 is connected to the heating unit 700. The replacement of the heating source 764 can be simply realized through this process.

In addition, a connection pipe connecting the outdoor unit 100, i.e., the water-refrigerant heat exchanger 155 to the water heating unit 700 is formed of a flexible material. Accordingly, by relative movement between the outdoor unit 100 and the water heating unit 700, the damage of the connection pipe can be minimized and thus the connection and separation of the water heating unit 700 (i.e., the outdoor unit) to and from the water-refrigerant heat exchanger 155 can be easily realized.

The following will describe operation of the water circulation system associated with the refrigerant cycle in more detail

First, a process for heating air and floor and supplying hot water using both of the water heating unit 700 and the outdoor unit 100 in a cold front area will be described hereinafter.

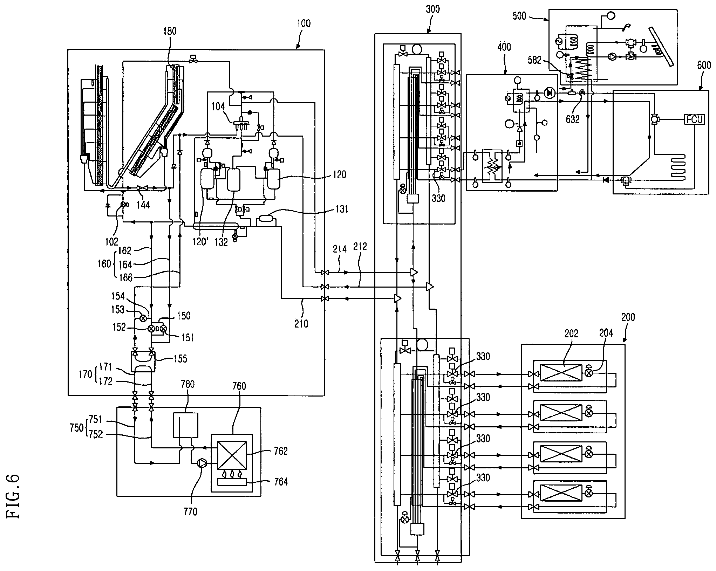

FIG. 6 is a view illustrating flows of the refrigerant and water in the heating mode in which both of the outdoor heat exchanger and the water heating unit of the water circulation system are used.

At this point, the bypass guide valve 144, outdoor expansion valve 102, hot water supplying valve 582, and heating valve 632 are in opened states and the over-heating prevention valve 153 and opening/closing valve 151 are in closed states.

Describing the flow of the refrigerant in the outdoor unit 100, the refrigerant discharged from the compressors 120 and 120' is directed into the heat recovery unit 300 through the oil separator 122 and the high pressure gas pipe 214.

The main valves 330 of the heat recovery unit 300 are turned off and the sub-valves 332 are turned on. Therefore, the refrigerant directed to the heat recovery unit 300 through the high pressure gas pipe 214 is directed to the air conditioning indoor gas pipe 212' through the branch pipe 340.

The refrigerant introduced into the air conditioning indoor gas pipe 212' through the branch pipe 340 is supplied to the air conditioning indoor unit 200 and condensed through heat exchange with the indoor air while passing through the indoor heat exchanger 202.

That is, in the heating mode, the indoor heat exchanger 202 functions as a condenser to heat the internal air by being heated. The refrigerant that is phase-changed into the liquid-phase refrigerant while passing through the indoor heat exchanger 202 is directed to the heat recovery unit 300 through the indoor liquid pipe 210'.

The liquid-phase refrigerant in the heat recovery unit 300 is introduced into the outdoor unit 100 through the liquid pipe 210. The refrigerant introduced into the outdoor unit 100 passes through the outdoor linear expansion valve 102 and is then directed to the outdoor heat exchanger 180. At this point, since the outdoor heat exchanger 180 functions as an evaporator, the liquid-phase refrigerant heat-exchanges with the outer air and thus is phase-changed into the gas-phase refrigerant.

The gas-phase low pressure refrigerant discharged from the outdoor heat exchanger 180 passes through the four-way valve and is then directed to the compressors 120 and 120' through the accumulator 132. The heating mode cycle is realized through the above-described processes.

Meanwhile, a part of the refrigerant passing through the outdoor over-cooler 130 is introduced into the water-refrigerant heat exchanger 155 through the first refrigerant pipe 162.

At this point, the heating source 764 in the water heating unit 700 supplies heat to the water heating member 762 and thus the water circulating the heating tank 780 and the water heating member 762 is heated by the heat.

The heated water heat-exchanges with the refrigerant while passing through the water-refrigerant heat exchanger 750 to provide heat for the refrigerant.

The refrigerant heat-exchanging with the water in the water-refrigerant heat exchanger 750 is directed into the outdoor unit through the third circulation pipe 716.

Accordingly, the refrigerant that is quickly cooled by the air conditioning indoor unit 200 in the cold front area is heated while passing through the water heating unit 700, thereby maximizing the heat exchange efficiency.

The following will describe in more detail flows of the refrigerant and water in the case where the indoor air is heated by shutting off the flow of the refrigerant into the outdoor heat exchanger 180 and operating the water heating unit 700.

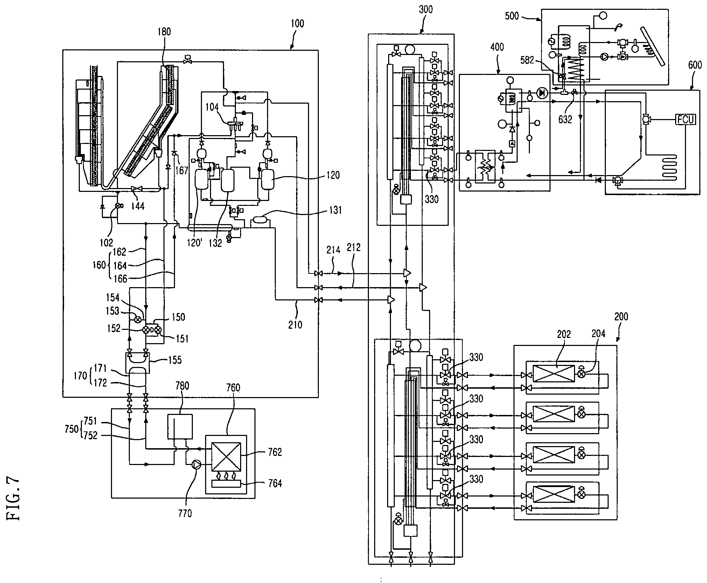

FIG. 7 is a view illustrating flows of the refrigerant and water in a heating mode in which only the water heating unit of the water circulation system associated with the refrigerant cycle is used.

At this point, the hot water supply valve 582 and heating valve 632 are in opened states and the bypass guide valve 144 an the outdoor linear expansion valve 12 are in closed states.

The indoor heat exchanger 202 functions as a condenser to heat the internal air by being heated. Since the expansion valves 204 are opened, the refrigerant that is phase-changed into the liquid-phase refrigerant while passing through the indoor heat exchanger 202 is directed to the heat recovery unit 300 through the indoor liquid pipe 210'.

The liquid-phase refrigerant in the heat recovery unit 300 is introduced into the outdoor unit 100 through the liquid pipe 210. Since the outdoor linear expansion valve 102 is in the closed state, the refrigerant is directed to the first refrigerant pipe 162 and expands while passing through the heating expansion valve 152.

At this point, in the water heating unit 700, the heating source 764 provides heat for the water heating member 762. In addition, the water circulating the heating tank 780 and the water heating member 762 is heated by the heat. The heated water heat-exchanges with the refrigerant while passing through the water-refrigerant heat exchanger 155.

The liquid-phase refrigerant is phase-changed into gas-phase refrigerant and then supplied to the compressors 120 and 120' through the third refrigerant pipe 166, the third check valve 167, and the four-way valve. The heating cycle is formed through the above-described processes.

The following will describe flows of the refrigerant and water in a defrosting mode using a heat pump refrigerant cycle, which is used when the outdoor heat exchanger 180 is frozen during the heating mode.

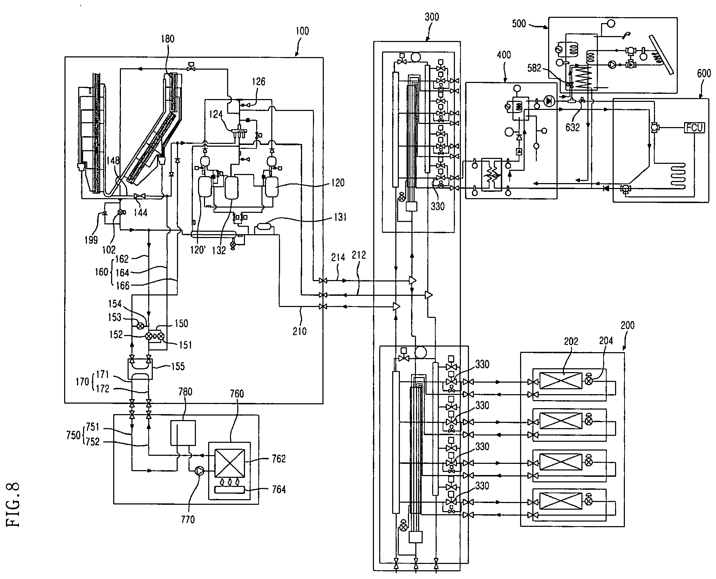

FIG. 8 is a view illustrating flows of the refrigerant and water in a defrosting mode of the water circulation system associated with the refrigerant cycle.

In the heating mode using the heat pump refrigerant cycle, the bypass guide valve 144, outdoor linear valve 102, heating expansion valve 152 are opened and the overheating prevention valve 153 and the bypass valve 142 are closed.

When the heating mode is performed, the outdoor heat exchanger 180 installed at an outdoor side is frozen and thus the heat exchange efficiency is deteriorated. Therefore, in order to improve the heat exchange efficiency, the defrosting mode is performed.

At this point, the bypass guide valve 144 and the outdoor linear expansion valve 102 are closed and the bypass valve 142 is opened. In addition, the heating source 764 operates to heat the water heating member 762. The water circulating the water heating unit 700 is heated and thus the water-refrigerant heat exchanger 155 operates as an evaporator.

Further, the pressure of the refrigerant measured by the high pressure sensor 126 is less than the target pressure and thus the bypass valve 142 is opened to increase the pressure of the refrigerant to the target pressure.

Describing the refrigerant flow with reference to FIG. 8, since the bypass valve 142 is opened, a part of the refrigerant compressed in the compressors is introduced into the outdoor discharge pipe 148 through the bypass pipe 140.

Since the bypass guide valve 144 is closed, the high temperature/high pressure refrigerant introduced into the outdoor discharge pipe 148.

At this point, the outdoor heat exchanger 180 is quickly defrosted by the high temperature/high pressure refrigerant and the refrigerant is condensed.

After the above, since the outdoor linear expansion valve 102 is closed, the condensed refrigerant passing through the outdoor heat exchanger 180 further passes through the first check valve 199.

Next, the refrigerant is introduced into the first refrigerant pipe 162. The refrigerant introduced into the first refrigerant pipe 152 expands in the heating expansion valve 152 and heat-exchanges with the water while passing through the water-refrigerant heat exchanger 155, thereby being evaporated.

The refrigerant evaporated by the water-refrigerant heat exchanger 155 is introduced into the four-way valve 124 through the third refrigerant pipe 166 and then recovered to the compressors 120 and 120' via the accumulator 132.

Meanwhile, a part of the refrigerant compressed in the compressors 120 and 120' is directed to the air conditioning indoor unit 200 and/or the water-heat exchange indoor unit 400 through the heat recovery unit 300.

That is, in the hot water circulation system associated with a heat pump according to one embodiment, the indoor air, floor, and hot water supply can be simultaneously or selectively realized even during the defrosting of the outdoor heat exchanger 180.

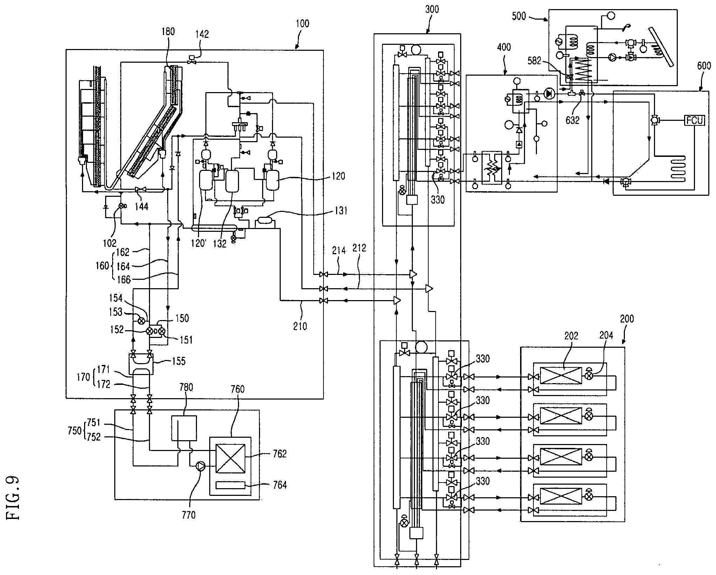

The following will describe a process for performing the heating mode using only the outdoor unit 100 without using the water heating unit 700 with reference to FIG. 9.

FIG. 9 is a view illustrating flows of the refrigerant and water in a heating mode in which only the outdoor heat exchanger of the water circulation system associated with the refrigerant cycle.

At this point, the water heating unit 700 allows the refrigerant to circulate without being heated.

To this end, the overheating prevention valve 722, bypass valve 142, opening/closing valve 151, and heating expansion valve 152 are closed, and the bypass guide valve 144 and outdoor linear expansion valve 102 are opened.

Accordingly, the flow of the refrigerant compressed in the compressors 120. and 120' is controlled by the heat recovery unit 300. The refrigerant is condensed while passing through the indoor unit 200 and/or the water-heat exchange unit 400.

The condensed refrigerant is introduced into the outdoor unit 100 via the heat recovery unit 300 and expands by the outdoor linear expansion valve 102. The refrigerant is evaporated while passing through the outdoor heat exchanger 180 and passes through the accumulator 132 and the compressors 120 and 120'.

Meanwhile, a part of the refrigerant introduced into the outdoor unit 100 is directed into the water-refrigerant heat exchanger 155 through the first refrigerant pipe 162.

Since the overheating prevention pipe 154 and the heating expansion valve 152 are closed, the refrigerant directed into the water heating unit 700 is confined in the first refrigerant pipe 162.

On the other hand, the refrigerant that is evaporated while passing through the outdoor heat exchanger 180 passes through the water-refrigerant heat exchanger 155 through the second refrigerant pipe 164 without heat exchange.

After the above, the refrigerant is directed into the compressors 120 and 120' through the third refrigerant pipe 166 via the four-way valve 124 and the accumulator 132.

The following will describe flow of the refrigerant in the heating mode using only the water heating unit 700 after the system has been left off for a long time.

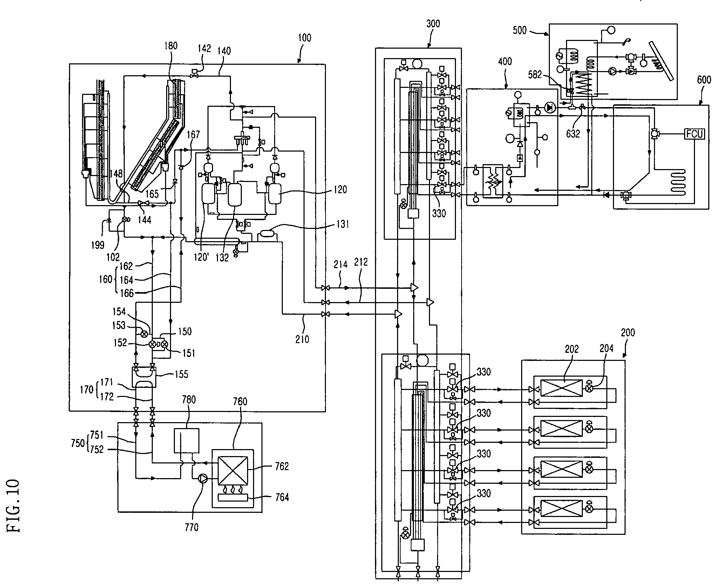

FIG. 10 is a view illustrating flows of the refrigerant and water in the heating mode after the water circulation system associated with the refrigerant cycle has been left off for a long time.

The bypass guide valve 144 and the outdoor linear expansion valve 102 are opened and the bypass valve 142, the heating expansion valve 152, and the overheating prevention valve 153 are closed. The heating source 764 operates to heat the water heating member 762.

At this point, the refrigerant compressed in the compressor 100 is directed into the outdoor unit 100 via the heat recovery unit 300 and the indoor unit 200 and passes through the outdoor linear expansion valve 102 and the outdoor heat exchanger 180.

However, when the outdoor heat exchanger 180 is left off for a long time, the refrigerant stays in the outdoor heat exchanger 180 for a long time. In addition, when only the water heating unit 700 is used without using the outdoor heat exchanger 180, the system may suffer from a shortage of the refrigerant.

Accordingly, the high temperature/high pressure compressed refrigerant is directed to the outdoor heat exchanger 180 through the bypass pipe 140.

To this end, the bypass guide valve 144 and the outdoor linear expansion valve 103 are closed to shut off the refrigerant flow and the bypass valve 142 is opened.

Accordingly, a part of the refrigerant compressed in the compressor 100 is directed to the outdoor discharge pipe 148 through the bypass pipe 140. Since the bypass guide valve 144 and the outdoor linear expansion valve 102 are closed, the refrigerant 180 passes through the first check valve 199.

After the above, the refrigerant is directed into the first refrigerant pipe 162 and passes through the water-refrigerant heat exchanger 155 to be heated to a refrigerant temperature that can maximize the heating efficiency.

Next, the refrigerant is introduced into the third refrigerant pipe 166 and passes through the third check valve 167, after which the refrigerant further passes through the four-way valve 124, the accumulator 132, and the compressors 120 and 121.

Meanwhile, a part of the refrigerant passing through the third check valve 167 is not directed to the four-way valve 124 but passes through the second check valve 165.

After the above, since the bypass guide valve 144 is closed, the refrigerant is introduced into the second refrigerant pipe 164.

The refrigerant introduced into the second refrigerant pipe 164 merges with the refrigerant in the first refrigerant pipe 162 and is heated while passing through the refrigerant heating unit 750, after which the refrigerant is directed to the outdoor unit.

The following will describe flow of the refrigerant in a cooling mode using only the outdoor unit of the water circulation system associated with the refrigerant cycle with reference to the accompanying drawing.

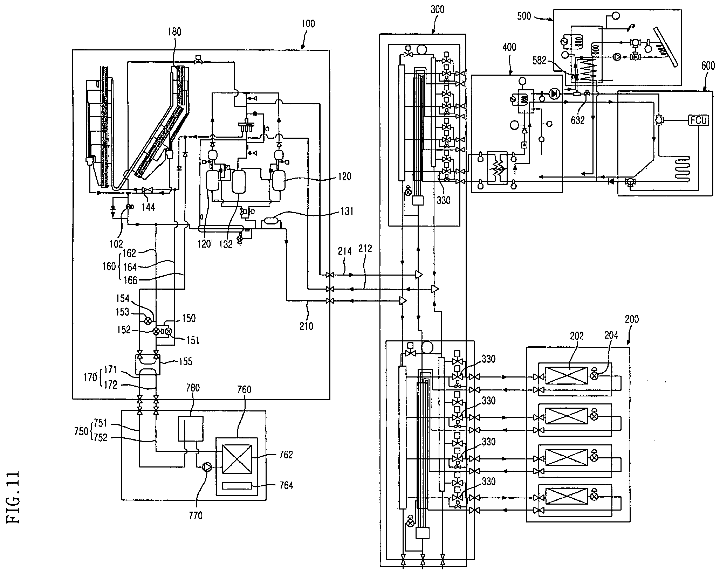

FIG. 11 is a view illustrating flows of the refrigerant and water in a cooling mode of the water circulation system associated with the refrigerant cycle.

When the water circulation system associated with the refrigerant cycle operates with a cooling mode, the water heating unit 700 is not used. That is, no refrigerant is directed to the water-refrigerant heat exchanger 155.

Accordingly, the opening/closing valve 151, overheating prevention valve 153, heating expansion valve 152, bypass valve 142, and outdoor linear expansion valve 12 are closed and the bypass guide valve 144 is opened.

The high temperature/high pressure refrigerant compressed by the compressors 120 and 120' is directed to the second check valve 165 via the four-way valve 124.

At this point, the refrigerant is not directed to the water-refrigerant heat exchanger 155 by the third check valve 167.

Since the opening/closing valve 151, overheating prevention valve 153, and heating expansion valve 152 are closed, the refrigerant passing through the second check valve 165 cannot be directed to the water-refrigerant heat exchanger 155 and condensed while passing through the outdoor heat exchanger 180 via the bypass guide valve 144 that is opened.

After the above, the refrigerant is directed to the heat recovery unit 300 via the first check valve 199. The heat recovery unit 300 guides the refrigerant to the air conditioning indoor unit 200 or the water-heat exchange indoor unit 400.

Next, the refrigerant introduced into the outdoor unit 100 is directed into the compressors 120 and 120' via the four-way valve 124 and the accumulator 132 and compressed in the compressors 120 and 120'.

The following will describe a method of controlling an output of the heating source in the water circulation system associated with the refrigerant cycle.

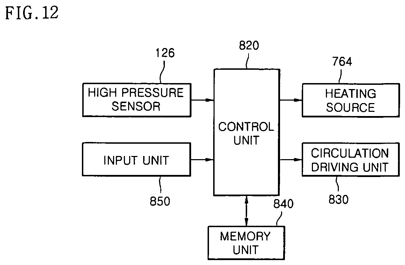

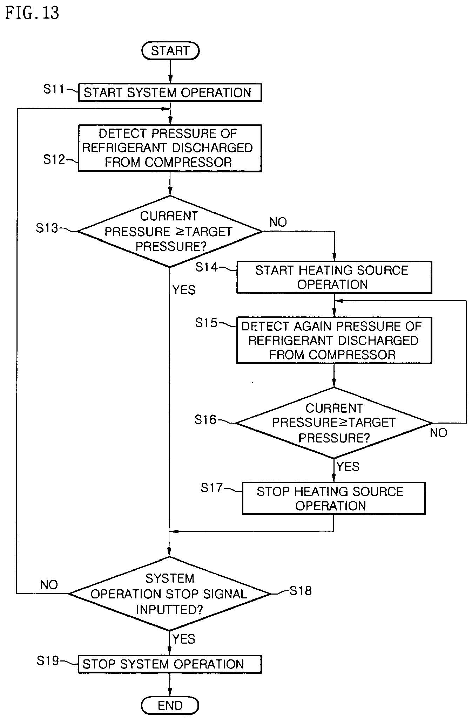

FIG. 12 is a block diagram of a control structure of the water circulation system associated with the refrigerant cycle of FIG. 1 and FIG. 13 is a flowchart illustrating a method for controlling the heating source in accordance with current pressure detected by the high pressure sensor in the water circulation system associated with the refrigerant cycle of FIG. 1.

The control structure includes a control unit 820 that adjusts output of the heating source 764 in accordance with current pressure of the refrigerant detected by the high pressure sensor 126, an input unit 850 for inputting signals relating to the operation of the system, a circulation driving unit 830 for circulating the water and refrigerant, and a memory unit 840 for storing information the control unit 820 needs to perform the control. The circulation driving unit 830 means the compressors 120 and 120' and the pumps 460, 540, and 770 that are provided to circulate the refrigerant and the water. That is, the operation stop of the circulation driving unit 830 means the operation stop of the system.

Here, the pressure sensor 126, input unit 850, memory unit 840, heating source 764, and circulation driving unit 830 are electrically connected to the control unit 820 so that control signals can be transferred thereto.

Meanwhile, the heating source operates to heat and evaporate the refrigerant. The output from the heating source 764 may be adjusted in accordance with the pressure of the refrigerant.

For example, when the refrigerant cycle of the system starts (S11), the current pressure of the refrigerant discharged from the compressors 120 and 120' is detected by the high pressure sensor 126 (S12). At this point, the pressure of the refrigerant discharged from the compressors 120 an 120' may be called high pressure.

Further, the control unit 820 determines if the current pressure is equal to or greater than target pressure (S13). When it is determined that the current pressure is less than the target pressure, the heating source 764 operates (S14).

Next, the pressure of the refrigerant is detected again by the high pressure sensor 126 (S15). The control unit 820 determines again if the current pressure is equal to or greater than the target pressure (S16). When it is determined that the current pressure is less than the target pressure, the pressure of the refrigerant is further detected by the high pressure sensor 126. It is determined that the current pressure is equal to or greater than the target pressure, the heating source 764 stops operating (S17).

In addition, except for the case where the operation stop signal is input through the input unit 830, the above-described processes are repeatedly performed (S18). If the operation stop signal is input, the system stops operation. That is, the circulation driving unit 830 stops operating.

The target pressure may be preset by an installer. The target pressure may be automatically calculated and preset based on a hot water supply load, an indoor heating load, and an indoor cooling load. At this point, the hot water supply load is a quantitative vale attained with reference to an amount of the hot water the user wants or a temperature of the hot water. The indoor heating load and the indoor cooling load are quantitative values of heating and cooling performance for maintaining comfort indoor environment.

For example, when more hot water or higher water temperature are necessary, this means that the hot water supply unit is enlarged. Therefore, the target pressure may be set to be higher. When more heat absorption and dissipation is necessary to maintain the comfort indoor environment, this means that the indoor heating load and the indoor cooling load increase. In this case, the target pressure may be set to be higher.

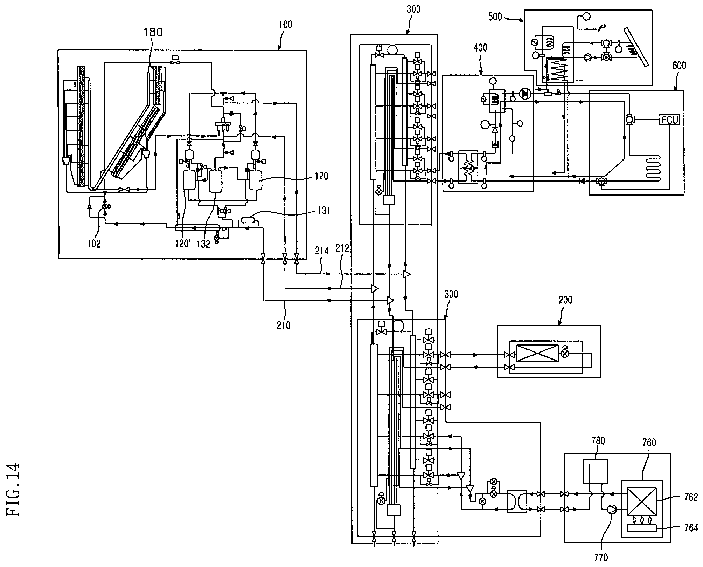

Further, the output of the heating source 764 may be controlled to be proportional to a difference between the pressure of the refrigerant and the target pressure. At this point, the output means an amount of heat generated by the heating source 764. That is, as the difference between the current pressure and the target pressure increases, the output of the heating source 764 is further enhanced. Therefore, when the current pressure is less than the target pressure, the time for allowing the current pressure to reach the target pressure can be reduced. That is, the system can quickly perform the target performance. According to the invention the water-refrigerant heat exchanger 155 is connected to the outdoor unit 100. In accordance with an alternative example not forming part of this invention, the water-refrigerant heat exchanger 155 may be connected to the heat recovery unit 300 as shown in FIG. 14. In this case, the water-refrigerant heat exchanger 155 is provided in the heat recovery unit 300 and detachably attached to the water heating unit 700.

According to this example, the hot water supply performance and the heating performance can be stably maintained even in a cold front area. In addition, the connection of the heating unit to the outdoor unit can be easily realized. It should be understood that numerous other modifications and embodiments can be devised by those skilled in the art that will fall within the scope of the invention as claimed. More particularly, various variations and modifications are possible in the component parts and/or arrangements of the subject combination arrangement within the scope of the disclosure, the drawings and the appended claims.

## Claims

1. A water circulation system including a refrigerant cycle, comprising:
an outdoor unit (100) comprising a compressor (120, 120') for compressing the refrigerant, an outdoor heat exchanger (180) for heat exchange between the refrigerant and outdoor air, and an expansion unit (102, 204, 152) for expanding the refrigerant;
a water-heat exchange indoor unit (400) including a first water-refrigerant heat exchanger (410) for heat exchange between the refrigerant and water, the water-heat exchange indoor unit (400) being connected to the compressor and the expansion unit to define the refrigerant circuit;
a hot water supply unit (500) for supplying the water passing through the first water-refrigerant heat exchanger (410);
a heating unit (600) for heating the indoor air using the water passing through the first water-refrigerant heat exchanger (410),
**characterized in that**:
the water circulation system further comprises:
a second water-refrigerant heat exchanger (155) that is provided in the outdoor unit (100) and connected to a side of the refrigerant cycle to heat the refrigerant using the water flowing therein;
a water heating unit (700) that is fluidly connected to the second water-refrigerant heat exchanger (155) to heat the water introduced into the second water-refrigerant heat exchanger (155); a refrigerant heating pipe (160) connecting the refrigerant circuit to the second water-refrigerant heat exchanger (155),
wherein the refrigerant heating pipe (160) comprises:
a first refrigerant pipe (162) for guiding at least a part of the refrigerant flowing between the first water-refrigerant heat exchanger (410) and the expansion unit (102, 204, 152) to the second water-refrigerant heat exchanger (155);
a second refrigerant pipe (164) for guiding at least a part of the refrigerant flowing between the first water-refrigerant heat exchanger (410) and the compressor (120, 120') to the second water-refrigerant heat exchanger (155); and
a third refrigerant pipe (166) for guiding the refrigerant discharged from the second water-refrigerant heat exchanger (155) to the compressor (120, 120').

2. The water circulation system according to claim 1, wherein the water heating unit (700) comprises:
a water pump (770) for allowing the water to forcedly flow;
a water heating member (762) for heating the water; and
a heating tank (780) for storing the water heated by the heating member.

3. The water circulation system according to claim 2, wherein the water heating member (762) comprises:
a water heating part for guiding flow of the water; and
a heating source (764) for generating heat for heating the refrigerant flowing along the water heating part.

4. The water circulation system according to claim 3, further comprising a pressure sensor (126) provided at an outlet side of the compressor (120,120'), wherein, when pressure of the refrigerant discharged from the compressor is less than a target pressure, the heating source (764) operating.

5. The water circulation system according to claim 3, further comprising a pressure sensor (126) provided on a portion of the refrigerant cycle, which corresponds to an outlet side of the compressor (120,120'), wherein an amount of the heat generated by the heating source (764) proportional to a difference between pressure of the refrigerant discharged from the compressor (120,120') and target pressure.

6. The water circulation system according to any one of claims 4 and 5, wherein the target pressure is set based on an indoor heating load, an indoor cooling load, and a hot water supply load.

7. The water circulation system according to claim 1, wherein a check valve (165) for preventing the refrigerant from being directed from the outdoor heat exchanger (180) to the compressor (120, 120') is provided between the second (164) and third (166) refrigerant pipes; and
a check valve (167) for preventing the refrigerant from being directed from the refrigerant circuit to the second water-refrigerant heat exchanger (155) is provided on the third refrigerant pipe (166).

8. The water circulation system according to claim 1, further comprising a heat recovery unit (300) that is connected between the outdoor unit (100) and the water-heat exchange indoor unit (400) to direct the refrigerant in a variety of directions.

9. The water circulation system according to claim 8, wherein a plurality of air conditioning indoor units (200) having respective indoor heat exchangers (202) for heat exchange between the indoor air and the refrigerant are connected to the heat recovery unit (300).

10. The water circulation system according to claim 8, wherein some of the air conditioning indoor units (200) are designed to heat the indoor air and the rest of the air conditioning indoor units (200) are designed to cool the indoor air.

11. The water circulation system according to any one of claims 1 to 10, wherein, in a defrosting mode or a heating mode after being left off, the refrigerant passing through the water-heat exchange indoor unit (400) is not directed to the outdoor heat exchanger (180) and the refrigerant passing through the water-heat exchange indoor unit (400) is introduced into the second water-refrigerant heat exchanger (155).

12. The water circulation system according to any one of claims 1 to 10, wherein, in a defrosting mode or a heating mode after being left off, a part of the refrigerant discharged from the compressor (120, 120') is directed to the second water-refrigerant heat exchanger (155) via the outdoor heat exchanger (180).

## Patentansprüche

1. Wasserzirkulationssystem, das einen Kältemittelkreislauf umfasst, wobei das Wasserzirkulationssystem aufweist:
eine Außeneinheit (100), die einen Kompressor (120, 120') zum Komprimieren des Kältemittels, einen Außenwärmetauscher (180) zum Wärmeaustausch zwischen dem Kältemittel und Au-βenluft und eine Expansionseinheit (102, 204, 152) zum Expandieren des Kältemittels aufweist;
eine Wasser-Wärmeaustauschinnenraumeinheit (400), die einen ersten Wasser/Kältemittel-Wärmetauscher (410) für einen Wärmeaustausch zwischen dem Kältemittel und Wasser aufweist,
wobei die Wasser-Wärmeaustauschinnenraumeinheit (400) mit dem Kompressor und der Expansionseinheit verbunden ist, um den Kältemittelkreislauf zu definieren;
eine Warmwasserversorgungseinheit (500) zum Zuführen des Wassers, das durch den ersten Wasser/Kältemittel-Wärmetauscher (410) strömt;
eine Heizeinheit (600) zum Erwärmen der Raumluft unter Verwendung des Wassers, das durch den ersten Wasser/Kältemittel-Wärmetauscher (410) strömt;
**dadurch gekennzeichnet, dass**
das Wasserzirkulationssystem ferner aufweist:
einen zweiten Wasser/Kältemittel-Wärmetauscher (155), der in der Außeneinheit (100) angeordnet ist und mit einer Seite des Kältemittelkreislaufs verbunden ist, um das Kältemittel unter Verwendung des darin strömenden Wassers zu erwärmen;
eine Wasserheizeinheit (700), die mit dem zweiten Wasser/Kältemittel-Wärmetauscher (155) in einer Fluidverbindung steht, um das in den zweiten Wasser/Kältemittel-Wärmetauscher (155) eingeführte Wasser zu erwärmen;
ein Kältemittelheizrohr (160), das den Kältemittelkreislauf mit dem zweiten Wasser/ Kältemittel-Wärmetauscher (155) verbindet,
wobei das Kältemittelheizrohr (160) aufweist:
ein erstes Kältemittelrohr (162), um zumindest einen Teil des zwischen dem ersten Wasser/ Kältemittel-Wärmetauscher (410) und der Expansionseinheit (102, 204, 152) strömenden Kältemittels zu dem zweiten Wasser/Kältemittel-Wärmetauscher (155) zu führen;
ein zweites Kältemittelrohr (164), um zumindest einen Teil des zwischen dem ersten Wasser/ Kältemittel-Wärmetauscher (410) und dem Kompressor (120, 120') strömenden Kältemittels zu dem zweiten Wasser/ Kältemittel-Wärmetauscher (155) zu führen; und
ein drittes Kältemittelrohr (166), um das aus dem zweiten Wasser/Kältemittel-Wärmetauscher (155) strömende Kältemittel zu dem Kompressor (120, 120') zu führen.

2. Wasserzirkulationssystem nach Anspruch 1, wobei die Wasserheizeinheit (700) aufweist:
eine Wasserpumpe (770), um eine Zwangsströmung des Wassers zu ermöglichen;
ein Wasserheizelement (762) zum Erwärmen des Wassers; und
einen Heiztank (780) zum Speichern des von dem Heizelement erwärmten Wassers.

3. Wasserzirkulationssystem nach Anspruch 2, wobei das Wasserheizelement (762) aufweist:
ein Wasserheizteil, um die Strömung des Wassers zu führen; und
eine Heizquelle (764) zum Erzeugen von Wärme, um das Kältemittel, das entlang des Wasserheizteils strömt, zu erwärmen.

4. Wasserzirkulationssystem nach Anspruch 3, das ferner einen Drucksensor (126) aufweist, der an einer Auslassseite des Kompressors (120, 120') angeordnet ist, wobei die Heizquelle (764) betrieben wird, wenn der Druck des aus dem Kompressor strömenden Kältemittels unterhalb eines Solldrucks liegt.

5. Wasserzirkulationssystem nach Anspruch 3, das ferner einen Drucksensor (126) aufweist, der an einem Bereich des Kältemittelkreislaufs angeordnet ist, der einer Auslassseite des Kompressors (120, 120') entspricht, wobei eine von der Heizquelle (764) erzeugte Wärmemenge proportional zu einer Differenz zwischen dem Druck des aus dem Kompressor (120, 120') strömenden Kältemittels und dem Solldruck ist.

6. Wasserzirkulationssystem nach einem der Ansprüche 4 und 5, wobei der Solldruck auf Basis eines Innenraumheizbedarfs, eines Innenraumkühlbedarfs und eines Warmwasserzufuhrbedarfs eingestellt wird.

7. Wasserzirkulationssystem nach Anspruch 1, wobei zwischen dem zweiten (164) und dritten (166) Kältemittelrohr ein Rückschlagventil (165) angeordnet ist, um zu verhindern, dass Kältemittel vom Außenwärmetauscher (180) zum Kompressor (120, 120') geleitet wird; und
an dem dritten Kältemittelrohr (166) ein Rückschlagventil (167) angeordnet ist, um zu verhindern, dass das Kältemittel vom Kältemittelkreislauf zum zweiten Wasser/Kältemittel-Wärmetauscher (155) geleitet wird.

8. Wasserzirkulationssystem nach Anspruch 1, das ferner eine Wärmerückgewinnungseinheit (300) aufweist, die zwischen der Außeneinheit (100) und der Wasser-Wärmeaustauschinnenraumeinheit (400) eingebunden ist, um das Kältemittel in diverse Richtungen zu leiten.

9. Wasserzirkulationssystem nach Anspruch 8, wobei mehrere Klimaanlageninnenraumeinheiten (200), die jeweils Innenraumwärmetauscher (202) aufweisen, um Wärme zwischen der Innenraumluft und dem Kältemittel auszutauschen, mit der Wärmerückgewinnungseinheit (300) verbunden sind.

10. Wasserzirkulationssystem nach Anspruch 8, wobei einige der Klimaanlageninnenraumeinheiten (200) so ausgelegt sind, dass die Innenraumluft erwärmt wird, und die restlichen Klimaanlageninnenraumeinheiten (200) so ausgelegt sind, dass sie die Innenraumluft kühlen.

11. Wasserzirkulationssystem nach einem der Ansprüche 1 bis 10, wobei bei einem Enteisungsmodus oder einem Heizmodus nach Nichtbenutzung das durch die Wasser-Wärmeaustauschinnenraumeinheit (400) geführte Kältemittel nicht zu dem Außenwärmetauscher (180) geleitet wird, und das durch die Wasser-Wärmeaustauschinnenraumeinheit (400) geführte Kältemittel in den zweiten Wasser/Kältemittel-Wärmetauscher (155) eingeleitet wird.

12. Wasserzirkulationssystem nach einem der Ansprüche 1 bis 10, wobei bei einem Enteisungsmodus oder einem Heizmodus nach Nichtbenutzung ein Teil des aus dem Kompressor (120, 120') strömenden Kältemittels über den Außenwärmetauscher (180) zu dem zweiten Wasser/ Kältemittel-Wärmetauscher (155) geleitet wird.

## Revendications

1. Système de circulation d'eau incluant un cycle réfrigérant, comprenant :
une unité extérieure (100) comprenant un compresseur (120, 120') pour comprimer le réfrigérant, un échangeur thermique extérieur (180) for un échange thermique entre le réfrigérant et l'air extérieur, et une unité d'expansion (102, 204, 152) for une expansion du réfrigérant ;
une unité intérieure d'échange thermique d'eau (400) incluant un premier échangeur thermique eau-réfrigérant (410) pour un échange thermique entre le réfrigérant et l'eau, l'unité intérieure d'échange thermique d'eau (400) étant connectée au compresseur et à l'unité d'expansion pour définir le circuit réfrigérant ;
une unité d'alimentation en eau chaude (500) pour alimenter de l'eau passant à travers le premier échangeur thermique eau-réfrigérant (410) ;
une unité de chauffage (600) pour chauffer l'air intérieur en utilisant l'eau passant à travers le premier échangeur thermique eau-réfrigérant (410),
**caractérisé en ce que** :
le système de circulation d'eau comprend en outre :
un second échangeur thermique eau-réfrigérant (155) qui est agencé dans l'unité extérieure (100) et connecté à un côté du cycle réfrigérant pour chauffer le réfrigérant en utilisant l'eau s'écoulant à l'intérieur ;
une unité de chauffage d'eau (700) qui est connectée de manière fluidique au second échangeur thermique eau-réfrigérant (155) pour chauffer l'eau introduite dans le second échangeur thermique eau-réfrigérant (155) ;
un tuyau de chauffage de réfrigérant (160) connectant le circuit réfrigérant au second échangeur thermique eau-réfrigérant (155),
dans lequel le tuyau de chauffage de réfrigérant comprend :
un premier tuyau de réfrigérant (162) pour guider au moins une partie du réfrigérant s'écoulant entre le premier échangeur thermique eau-réfrigérant (410) et l'unité d'expansion (102, 204, 152) vers le second échangeur thermique eau-réfrigérant (155) ;
un deuxième tuyau de réfrigérant (164) pour guider au moins une partie du réfrigérant s'écoulant entre le premier échangeur thermique eau-réfrigérant (410) et le compresseur (120, 120') vers le second échangeur thermique eau-réfrigérant (155) ; et
un troisième tuyau de réfrigérant (166) pour guider le réfrigérant déchargé depuis le second échangeur thermique eau-réfrigérant (155) vers le compresseur (120, 120').

2. Système de circulation d'eau selon la revendication 1, dans lequel l'unité de chauffage d'eau (700) comprend :
une pompe à eau (770) pour permettre à l'eau de s'écouler de manière forcée ;
un élément de chauffage d'eau (762) pour chauffer l'eau ; et
un réservoir de chauffage (780) pour stocker l'eau chauffée par l'élément de chauffage.

3. Système de circulation d'eau selon la revendication 2, dans lequel l'élément de chauffage d'eau (762) comprend :
une partie de chauffage d'eau pour guider l'écoulement de l'eau ; et
une source de chauffage (764) pour générer de la chaleur afin de chauffer le réfrigérant s'écoulant le long de la partie de chauffage d'eau.

4. Système de circulation d'eau selon la revendication 3, comprenant en outre un capteur de pression (126) agencé sur un côté de sortie du compresseur (120, 120'), dans lequel, lorsqu'une pression du réfrigérant déchargé depuis le compresseur est inférieure à une pression cible, la source de chauffage (764) fonctionne.

5. Système de circulation d'eau selon la revendication 3, comprenant en outre un capteur de pression (126) agencé sur une partie du cycle réfrigérant, qui correspond à un côté de sortie du compresseur (120, 120'), dans lequel une quantité de la chaleur générée par la source de chauffage (764) est proportionnelle à une différence entre une pression du réfrigérant déchargé depuis le compresseur (120, 120') et une pression cible.

6. Système de circulation d'eau selon l'une quelconque des revendications 4 et 5, dans lequel la pression cible est établie sur la base d'une charge de chauffage intérieure, d'une charge de refroidissement intérieure, et d'une charge d'alimentation en eau chaude.

7. Système de circulation d'eau selon la revendication 1, dans lequel un clapet anti-retour (165) pour empêcher que le réfrigérant ne soit dirigé depuis l'échangeur thermique extérieur (180) vers le compresseur (120, 120') est agencé entre les deuxième (164) et troisième (166) tuyaux de réfrigérant ; et
un clapet anti-retour 167) pour empêcher que le réfrigérant ne soit dirigé depuis le circuit réfrigérant vers le second échangeur thermique eau-réfrigérant (155) est agencé sur le troisième tuyau de réfrigérant (166).

8. Système de circulation d'eau selon la revendication 1, comprenant en outre une unité récupératrice de chaleur (300) qui est connectée entre l'unité extérieure (100) et l'unité intérieure d'échange thermique d'eau (400) pour diriger le réfrigérant dans une variété de directions.

9. Système de circulation d'eau selon la revendication 8, dans lequel une pluralité d'unités intérieures de conditionnement d'air (200) ayant des échangeurs thermiques intérieurs respectifs (202) pour un échange thermique entre l'air intérieur et le réfrigérant, sont connectées à l'unité récupératrice de chaleur (300).

10. Système de circulation d'eau selon la revendication 8, dans lequel certaines des unités intérieures de conditionnement d'air (200) sont conçus pour chauffer l'air intérieur et le reste des unités intérieures de conditionnement d'air (200) sont conçus pour refroidir l'air intérieur.

11. Système de circulation d'eau selon l'une quelconque des revendications 1 à 10, dans lequel, dans un mode de dégivrage ou un mode de chauffage après avoir été stoppé, le réfrigérant passant à travers l'unité intérieure d'échange thermique d'eau (400) n'est pas dirigé vers l'échangeur thermique extérieur (180) et le réfrigérant passant à travers l'unité intérieure d'échange thermique d'eau (400) est introduit dans le second échangeur thermique eau-réfrigérant (155).

12. Système de circulation d'eau selon l'une quelconque des revendications 1 à 10, dans lequel, dans un mode de dégivrage ou un mode de chauffage après avoir été stoppé, une partie du réfrigérant déchargé depuis le compresseur (120, 120') est dirigée vers le second échangeur thermique eau-réfrigérant (155) via l'échangeur thermique extérieur (180).
